# EUROPEAN PATENT APPLICATION

(11) **EP 4 404 011 A1**
(43) Date of publication of application: **24.07.2024**
(21) Application number: 23219030.6
(22) Date of filing: 21.12.2023
(51) Int. Cl.: G05B 19/418

(54) **METHOD FOR OPERATING A VISION SYSTEM**

(30) Priority: 23.01.2023 IT 202300000921
(71) Applicant: G.D S.p.A., 40133 Bologna (BO) (IT)
(72) Inventor: CESARINI, Maria Eleonora, 40133 Bologna (BO) (IT); PETTINARI, Fabrizio, 40133 Bologna (BO) (IT); SOLAROLI, Matteo, 40026 Imola (BO) (IT)
(74) Representative: Frontoni, Stefano

(57) **Abstract**

Described herein is a method for operating a vision system (10) for controlling an operating process of a manufacturing machine (200) operating on articles (100), wherein said vision system (10) comprises:
- at least one camera (12A, 12B, 12C);
- at least one lighting device (14A, 14B, 14C); and
- at least one image-processing unit (16A, 16B, 16C),
the method comprising an automatic procedure for setting the vision system (10).

## Description

### Field of the invention

The present invention relates to a method for operating a vision system for controlling an operating process of a manufacturing machine operating on articles.

In a way in itself known, a vision system of this type normally comprises a plurality of cameras and lighting devices associated to them, arranged in various points of the machine.

The vision system acquires images of the articles in different steps of the operating process of the machine, and processes these images via an image-processing unit to check that the articles meet given reference conditions.

An example of application of such a vision system regards control of a process of application of labels on packages via a labelling machine.

In this context, the vision system may, for example, be used to check that the individual label has been applied in a position and according to an orientation that are correct, and that the label applied does not present defects such as creases, bubbles, missing graphic elements, etc.

A technical problem that afflicts vision systems according to the prior art is represented by the complexity of the procedure necessary for setting the systems themselves for each new application.

With reference to the labelling process mentioned above, for a new application that envisages, for example, applying a new label of a different type, the operator must in fact look for the most suitable operating parameters for each lighting device and each camera of the system, on the basis of the characteristics of shape, colour, surface, etc., of the new label.

The above activity entails a wide range of tests, and selection of the operating parameters is eventually made by the operator on the basis of his or her experience and perceptions regarding the images acquired by the vision system in the various tests.

It is consequently evident that such an activity of setting of the vision system involves prolonged machine stoppages and entails intervention of highly specialized operators.

In this context, the present invention proposes, instead, a method for operating a vision system of the type referred to above characterized by an automatic procedure for setting the vision system.

In general, the present invention regards a method according to claim 1. Moreover, the present invention regards a vision system according to claim 12 and a manufacturing machine according to claim 13.

The claims form an integral part of the teaching provided herein.

Further characteristics and advantages of the present invention will emerge clearly from the ensuing description with reference to the annexed drawings, which are provided purely by way of non-limiting example and in which:
- Figure 1 is a schematic illustration of an example of manufacturing machine equipped with the vision system described herein;
- Figure 2 is a schematic illustration of the method described herein;
- Figure 3 represents an article of an example of application of the method described herein; and
- Figures 4A, 4B, and 4C represent examples of images acquired in the method described herein.

In the ensuing description, various specific details are illustrated aimed at enabling an in-depth understanding of the embodiments. The embodiments may be provided without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the solution described herein regards a method for operating a vision system for controlling an operating process of a manufacturing machine operating on articles.

The aforesaid manufacturing machine may, for example, be a machine used on a line for the production of articles or else a line for packaging articles.

In a preferred application of the solution described herein, the manufacturing machine in question is a labelling machine for application of one or more labels on packages, in particular containers.

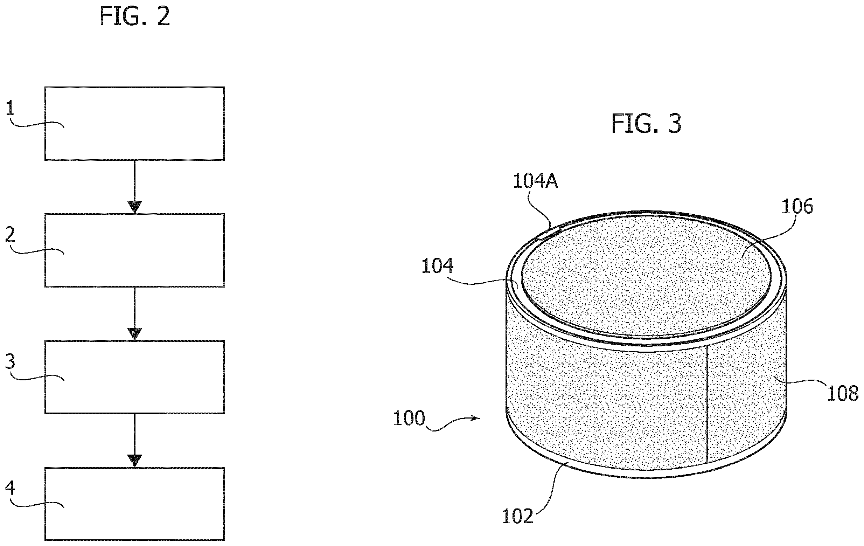

In this connection, Figure 3 illustrates by way of example a container 100, formed by a container body 102 and a lid 104, applied on which are a first label 106, on a top surface of the lid 104, and a second label 108, on an outer side surface of the container body 102. The second label 108 is wrapped all around the container body 102 so its own opposite ends overlap one another.

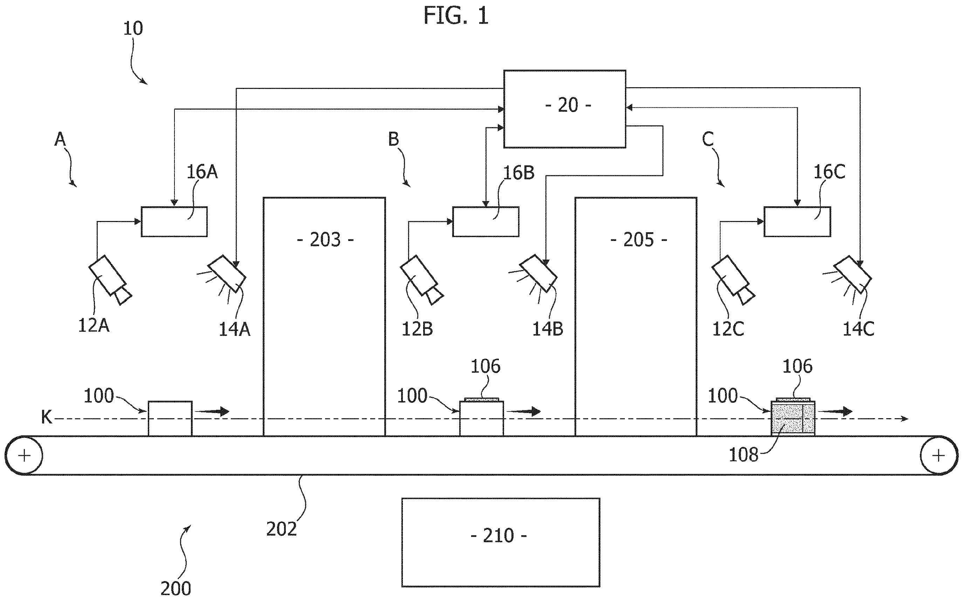

Figure 1 is a schematic illustration of an example of labelling machine for applying the labels 106 and 108 on the container 100.

The labelling machine of Figure 1 - designated as a whole by the reference number 200 - comprises two workstations 203, 205, a vision system 10 positioned in distinct areas A, B, and C of the machine, and a conveyor 202 for feeding in succession the containers 100 along a processing path K that traverses the workstations 203 and 205 and the areas A, B, and C.

The workstation 203 operates for applying the first label 106 on the top surface of the lid 104 of the individual container 100. The workstation 205 operates, instead, for applying the second label 108 on the outer side surface of the container body 102 of the individual container 100.

The areas A, B, and C represent the various points of the machine 200 in which the vision system 10 acquires the images of the containers 100 to monitor the labelling process.

In particular, in the area A, which is set upstream of the two workstations 203 and 205, images of the containers 100 still without labels are acquired, in the area B, which is downstream of the workstation 203 and upstream of the workstation 205, images of the labels 106 applied on the containers 100 are acquired, and finally in the area C, which is downstream of the workstation 205, images of the labels 108 applied on the containers 100 are acquired.

In the example illustrated, the vision system 10 comprises a camera 12A and a lighting device 14A arranged in the area A, a camera 12B and a lighting device 14B arranged in the area B, and a camera 12C and a lighting device 14C arranged in the area C. Incidentally, by the term "camera" is here to be understood any one from among a photographic camera, a TV camera, and a video camera.

In a way in itself known, the cameras 12A, 12B, 12C operate for acquiring images of the containers 100, while the lighting devices 14A, 14B, and 14C operate to create a lit-up state of the containers 100 such as to render visible given aesthetic features of the containers 100 in the images acquired.

The vision system 10 further comprises at least one image-processing unit configured for executing image-processing algorithms. The processing unit may, for example, comprise at least one microprocessor programmed via software instructions.

For ease of treatment, in the example illustrated the system 10 comprises image-processing units 16A, 16B, and 16C connected to the cameras 12A, 12B and 12C, respectively.

In any case, the image-processing unit of the vision system may be constituted either by a processing system divided into multiple processing units, as in the example illustrated, or else by a single processing unit operatively connected to each camera of the system.

The image-processing unit of the vision system 10 may, first of all, be configured for executing a first image-processing algorithm to modify, for example, the brightness and/or the contrast of the images acquired by the cameras 12A, 12B and 12C.

Moreover, the image-processing unit of the vision system 10 may be configured for executing a further image-processing algorithm to process the images acquired by the cameras 12A, 12B, and 12C so as to determine one or more values of at least one image feature in the images acquired.

In general, according to the type of application, the image features that can be detected by the vision system 10 may regard a position, an orientation, a dimension, a shape, a colour, a surface, etc.

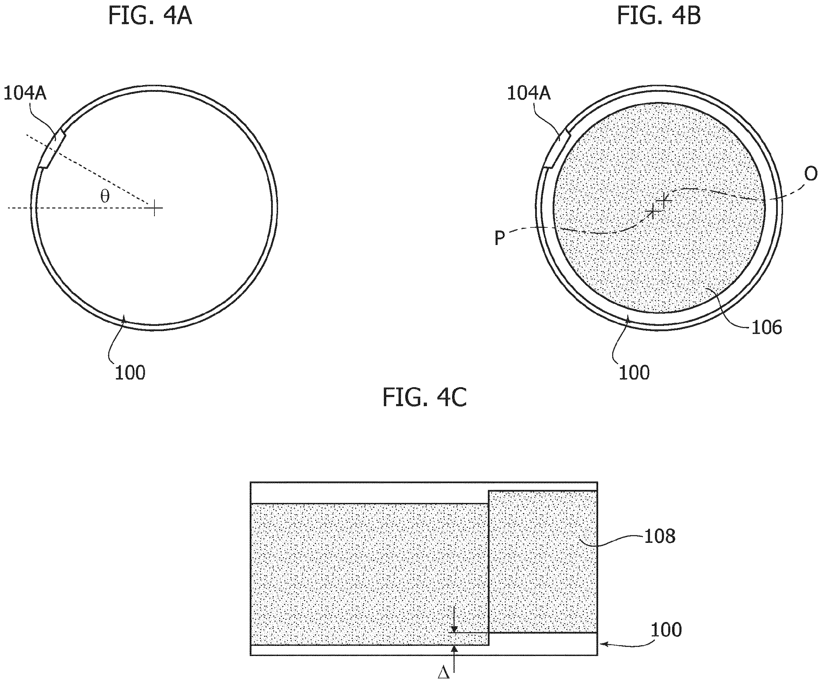

With specific reference to the example illustrated, Figures 4A, 4B, and 4C represent images of a container 100 acquired in the areas A, B, and C, respectively. On the same images, Figures 4A, 4B, and 4C moreover indicate the image features that are detected by the vision system 10.

As may be seen in Figure 4A, in the area A the camera 12A is configured for acquiring an image from above of the container 100 without labels, and the image-processing unit 16A is configured for processing the acquired image so as to determine an angle θ representing an orientation of the container 100 about a vertical axis I; in the example illustrated, the orientation of the container 100 is established with reference to a surface feature of the lid 104 in the form of a notch 104A made in a point along the peripheral region of the lid itself.

On the other hand, as may be seen in Figure 4B, in the area B the camera 12B is configured for acquiring an image of the label 106 applied on the container 100, and the image-processing unit 16B is configured for processing the acquired image so as to determine a position P of the centre of the label 106 with respect to the geometrical centre O of the lid 102.

Finally, as may be seen in Figure 4C, in the area C the camera 12C is configured for acquiring an image of the label 108 applied on the container 100, and the image-processing unit 16C is configured for processing the acquired image so as to determine a distance Δ representing the degree of mutual alignment of the overlapping ends of the label 108.

During normal operation of the labelling machine 200, the image-processing units 16A, 16B, 16C transmit the values determined of the image features θ, P, Δ to a control unit 210 of the machine itself, and this uses the aforesaid values as feedback control signals for the operating devices of the machine.

In this way, the control unit 210 is able to control the operating process of the machine, implementing the appropriate adjustments of the operating parameters of the devices of the machine when necessary.

As anticipated above, the method described herein is characterized by comprising an automatic procedure for setting the vision system 10.

Preferably, the above procedure is performed during operation of the machine 200 according to a testing mode in which the results of the detections made by the vision system 10 on the containers 100 are not used for controlling the operating devices of the machine as discussed above.

For the rest, operation according to the testing mode does not differ substantially from normal operation of the machine in the production mode.

Preferably, the containers 100 on which the machine has operated during the automatic setting step in question will then constitute waste or, in any case, will then be subjected to particular checks not envisaged during normal operation of the machine.

The automatic procedure for setting the vision system 10 envisages execution of a predefined succession of steps for each of the areas A, B, and C.

Focussing now attention upon just the area A for simplicity of treatment, the above procedure comprises (see Figure 2):
- in a first operating condition of the vision system 10, acquiring via the camera 12A a first image of a container 100 and processing the first image using an image-processing algorithm to obtain a value of an image feature in the first image (step 1 of Figure 2);
- in a second operating condition of the vision system 10, acquiring, via the camera 12A, a second image of a second, subsequent, container 100 and processing the second image using an image-processing algorithm to obtain a value of the same image feature in the second image (step 2 of Figure 2);
- selecting one between the first operating condition and the second operating condition on the basis of a comparison - which may be direct or else indirect and based upon a reference value - between the value obtained from the first image and the value obtained from the second image (step 3 of Figure 2); and
- supplying to a control unit 20 of the vision system one or more operating parameters and/or one or more image-processing algorithms of the selected first operating condition or second operating condition (step 4 of Figure 2).

The number of operating conditions of the vision system 10 tested during the procedure may evidently be even considerably higher than two and, in general, may vary according to the requirements of the specific applications.

The variations of the operating condition of the vision system 10 may, for example, regard:
- one or more operating parameters of the camera 12A, for example, the shutter speed;
- one or more operating parameters of the lighting device 14A, for example, the light intensity, the colour of the luminous flux, the direction of illumination, etc.; and
- one or more image-processing algorithms, for example to vary the pre-set levels of contrast and/or brightness of the acquired and pre-processed image, or else to vary the mode with which the image feature of interest is determined.

The steps as described above are implemented also for the areas B and C of the labelling machine 200.

Evidently, the settings of the vision system 10 tested in the areas A, B, and C, may vary from one area to another according to the image feature to be determined in the specific area.

In general, the automatic procedure for setting the vision system 10 hence envisages operating the vision system in different operating conditions and selecting, from among the operating conditions tested, the one that provides the best results for the detections envisaged during the new operation of the machine.

The operating condition selected will then be the one used for the new operation of the machine.

Preferably, the automatic setting procedure described herein envisages testing of multiple operating conditions of the vision system 10 by acquiring a plurality of images of as many containers 100 and not of a single container, with the advantage of being thus able to operate the machine 200 according to a mode substantially corresponding to its production mode. Alternatively, it is in any case also possible to envisage acquisition of a plurality of images of one and the same container 100. In this case, the operating mode of the machine may be regulated so as to allow the vision system 10 to acquire the envisaged number of images of a single container 100.

To return to Figures 4A, 4B, and 4C, the automatic procedure for setting the vision system 10 hence envisages:
- in the area A, acquisition of a plurality of images of containers 100 and processing of these images to obtain respective values of an image feature, varying one or more operating parameters of the camera 12A and/or of the lighting device 14A and/or varying one or more of the image-processing algorithms used;
- in the area B, acquisition of a plurality of images of labels 106 applied on containers 100 and processing of these images to obtain respective values of the same image feature, varying one or more operating parameters of the camera 12B and/or of the lighting device 14B and/or varying one or more of the image-processing algorithms used; and
- in the area C, acquisition of a plurality of images of labels 108 applied on containers 100 and processing of these images to obtain respective values of the aforesaid image feature, varying one or more operating parameters of the camera 12C and/or of the lighting device 14C and/or varying one or more of the image-processing algorithms used.

The image feature determined may, for example, be an optical contrast calculated with reference to predefined parts of the images acquired. In this way, the automatic setting procedure described herein may select an operating condition of the vision system such as to guarantee a clear and well-defined reproduction of the features of interest of the articles in the images acquired.

For instance, for the images acquired in the area A via the camera 12A, the image feature may be the optical contrast between the notch 104A and the surrounding region of the lid 104 as reproduced in the images themselves.

Likewise, for the images acquired in the area B via the camera 12B, the image feature may be the optical contrast between the label 106 and the surrounding region of the lid 104 (as reproduced in the images), and, finally, for the images acquired in the area C via the camera 12C, the image feature may be the optical contrast between the label 108 and the surrounding region of the container body 102 (as reproduced in the images).

The automatic setting procedure will verify which setting of the vision system 10 makes it possible to obtain the maximum calculated values of optical contrast and will identify such a setting as new operating condition of the vision system 10.

In particular, the automatic setting procedure will identify as new operating condition of the system the set that comprises:
- the operating parameters of the camera 12A and of the lighting device 14A and the one or more image-processing algorithms used that have led to obtaining a maximum contrast value from among those calculated by the image-processing unit 16A;
- the operating parameters of the camera 12B and of the lighting device 14B and the one or more image-processing algorithms used that have led to obtaining a maximum contrast value from among those calculated by the image-processing unit 16B; and
- the operating parameters of the camera 12C and of the lighting device 14C and the one or more image-processing algorithms used that have made it possible to obtain a maximum contrast value from among those calculated by the image-processing unit 16C.

In general, the image feature may in any case be, for example, one from among the following: a contrast, a shape, a colour, a dimension, a surface, etc.

On the other hand, the mode with which the selection is made of one from among the operating conditions tested on the basis of the values determined by processing the different images acquired may vary from one application to another according to the type of image feature to be determined in the automatic setting procedure. For instance, the selection step may envisage verifying for which operating condition the minimum value has been obtained from among the values obtained from image processing, instead of the maximum value as described above.

In one or more alternative embodiments, selection of the operating condition may instead include the use of at least one reference value for each image feature, and, in this case, the step of selection of the operating condition verifies for which operating condition tested the value closest to the aforesaid reference value is obtained from processing of the corresponding image acquired.

Consequently, with reference to the aforesaid first and second operating conditions, the first operating condition will be selected if the value obtained from the first image is closer to the reference than is the value obtained from the second image, or else the second operating condition will be selected if the value obtained from the second image is closer to the reference value than is the value obtained from the first image. It is understood that, in this case, the comparison between the values obtained from processing the different images is made indirectly using the aforesaid reference value as further term of comparison.

The use of reference values may be advantageous in the cases where, for example, the automatic setting procedure envisages determination of an image feature such as a shape, a dimension, or a surface, for which the corresponding optimal values do not necessarily correspond to maximum or minimum values.

In some applications, the image feature determined by the automatic setting procedure may even be the same image feature as the one that, during normal operation of the machine, will be determined for controlling operation itself. With reference to the example illustrated, the image feature may hence, for example, be the angle θ, the position P, or the distance Δ of Figures 4A-4C. In this connection, it should be noted that these parameters can be determined indirectly through determination of a surface, a shape, etc. In an application, the position P may, for example, be determined indirectly by analysing the shape of the region of the lid around the label 106, which corresponds to a circular ring when the position P coincides with the centre O of the lid 104. Likewise, the distance Δ of Figure 4C may, for example, be determined by analysing the shape of the region of the container body 102 above or below the label 108, which corresponds to a rectangle when the distance Δ is equal to zero and hence the opposite ends of the label 108 are perfectly aligned. In this case, selection of the operating condition for the new operation of the machine may, for example, be made on the basis of reference values, indicating a reference shape, with which to compare the values obtained from processing of the various images acquired.

The various steps of the setting procedure described herein may be implemented automatically using the control unit 20 itself of the vision system 10. Incidentally, this may, for example, comprise at least one microprocessor programmed via software instructions. On the other hand, it should be noted that the control unit 20 may include the same image-processing system referred to above.

The operating parameters of the cameras 12A, 12B, 12C and of the lighting devices 14A, 14B, 14C and the image-processing algorithms that together represent the operating condition selected may, for example, be saved to a storage unit so as to be immediately available for being used by the control unit 20 for starting a new process of the machine 200.

In view of the foregoing, at the moment when on the machine 200 a new production is envisaged, where, for example, the colour and/or shape and/or dimensions of the labels 106 and 108 differ from those of a previous application, in order to set the vision system 10 the operator will simply have to start an operating process of the machine with the new labels 106 and 108 and according to the aforesaid testing mode, and simultaneously start the automatic setting procedure described above.

The above procedure will identify automatically the operating condition of the vision system 10 for the new application, in the form of operating parameters of the cameras 12A, 12B, and 12C, and of the lighting devices 14A, 14B, and 14C, and of image-processing algorithms, putting in an extremely short time the machine 200 in a condition to start the new production.

With reference to the drawbacks of the prior art discussed at the outset, it hence appears evident that the solution described herein enables them to be overcome completely by providing a procedure for setting the vision system that is automatic, fast, and reliable, and does not required an intervention by an operator specialized in vision systems.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A method for operating a vision system (10) for controlling an operating process of a manufacturing machine (200) operating on articles (100), wherein said vision system (10) comprises:
- at least one camera (12A, 12B, 12C);
- at least one lighting device (14A, 14B, 14C); and
- at least one image-processing unit (16A, 16B, 16C);
the method comprising an automatic procedure for setting the vision system (10) that comprises the steps of:
- in a first operating condition of the vision system (10), acquiring, via said camera (12A, 12B, 12C), a first image of an article (100) in at least one step (A, B, C) of the operating process of the manufacturing machine (200), and processing said first image using an image-processing algorithm to obtain one or more values of at least one image feature in said first image;
- in at least one second operating condition of the vision system (10), acquiring, via said camera (12A, 12B, 12C), at least one second image of an article (100) in said at least one step (A, B, C) of the operating process of the manufacturing machine (200), and processing said second image using an image-processing algorithm to obtain one or more values of said image feature in said second image;
- selecting one between said first operating condition and said second operating condition of said vision system (10) on the basis of a comparison between said one or more values obtained from said first image and said one or more values obtained from said second image; and
- supplying to a control unit (20) of said vision system (10) one or more operating parameters and/or one or more image-processing algorithms of said first operating condition or said second operating condition selected.

2. The method according to claim 1, wherein said selection step includes selecting said first operating condition if said one or more values obtained from said first image are maximum or minimum values with respect to said one or more values obtained from said second image, or else selecting said second operating condition if said one or more values obtained from said second image are maximum or minimum values with respect to said one or more values obtained from said first image.

3. The method according to claim 1, wherein said selection step includes obtaining one or more reference values for each image feature, and selecting one between said first operating condition and said second operating condition of said vision system (10) on the basis of a comparison between said one or more reference values and, respectively, said one or more values obtained from said first image and said one or more values obtained from said second image.

4. The method according to claim 3, wherein said selection step includes selecting said first operating condition if said one or more values obtained from said first image are closer to said one or more reference values than are said one or more values obtained from said second image, or else selecting said second operating condition if said one or more values obtained from said second image are closer to said one or more reference values than are said one or more values obtained from said first image.

5. The method according to any one of the preceding claims, wherein in said first operating condition of said vision system (10):
said at least one lighting device (14A, 14B, 14C) is operated according to a first operating parameter;
said at least one camera (12A, 12B, 12C) is operated according to a first operating parameter; and
said at least one image-processing unit (16A, 16B, 16C) executes at least one first image-processing algorithm; and wherein
in said second operating condition of said vision system (10):
said at least one lighting device (14A, 14B, 14C) is operated according to a second operating parameter different from said first operating parameter; and/or
said at least one camera (12A, 12B, 12C) is operated according to a second operating parameter different from said first operating parameter; and/or
said at least one processing unit (16A, 16B, 16C) executes at least one second image-processing algorithm different from said first image-processing algorithm.

6. The method according to any one of the preceding claims, wherein said vision system (10) further comprises:
- at least one second camera (12B, 12C);
- at least one second lighting device (14B, 14C); and
- possibly at least one second image-processing unit (16B, 16C);
said automatic procedure for setting the vision system further comprising:
in said first operating condition or said second operating condition of the vision system (10), acquiring, via said at least one second camera (12B, 12C), a third image of an article (100) in a second step (B, C) of the operating process, and processing said third image using an image-processing algorithm to obtain one or more values of at least one second image feature in said third image; and
in said second operating condition or said first operating condition of the vision system (10), acquiring, via said at least one second camera (12B, 12C), a fourth image of an article (100) in said second step (B, C) of the operating process, and processing said fourth image using an image-processing algorithm to obtain one or more values of said at least one second image feature in said fourth image; and
wherein said selection step includes selecting one between said first operating condition and said second operating condition of said vision system (10) on the basis of a comparison between:
- said one or more values obtained from said first image and said one or more values obtained from said second image; and
- said one or more values obtained from said third image and said one or more values obtained from said fourth image.

7. The method according to claim 6, wherein
in said first operating condition of said vision system:
said at least one second lighting device (14B, 14C) is operated according to a first operating parameter;
said at least one second camera (12B, 12C) is operated according to a first operating parameter;
said image-processing unit (16A, 16B, 16C) or said second image-processing unit (16B, 16C) executes at least one third image-processing algorithm; and wherein
in said second operating condition of said vision system (10):
said at least one second lighting device (14B, 14C) is operated according to a second operating parameter different from said first operating parameter; and/or
said at least one second camera (12B, 12C) is operated according to a second operating parameter different from said first operating parameter; and/or
said image-processing unit (16A, 16B, 16C) or said second image-processing unit (16B, 16C) executes at least one fourth image-processing algorithm different from said at least one third image-processing algorithm.

8. The method according to any one of the preceding claims, wherein following upon start of an operating process of said manufacturing machine (200) according to a production mode, said method comprises:
- in said selected first operating condition or second operating condition of said vision system (10), acquiring, via said at least one camera (12A, 12B, 12C), an image of an article (100) in said at least one step (A, B, C) of the operating process of said manufacturing machine (200);
- processing said image using an image-processing algorithm to obtain one or more values of an image feature (θ, P, Δ) in said acquired image; and
- transmitting said one or more values of said image feature (θ, P, Δ) to a control unit (210) of said manufacturing machine (200).

9. The method according to any one of the preceding claims, wherein said manufacturing machine is a labelling machine (200) and wherein said operating process of said machine includes applying at least one label (106, 108) on a package, preferably a container (100), and wherein acquiring an image of an article (100) in at least one step (A, B, C) of the operating process includes acquiring images of said package before and/or after said at least one label (106, 108) is applied on said package (100).

10. The method according to any one of the preceding claims, wherein said at least one image feature comprises at least one from among the following: an optical contrast, a shape, a colour, a surface, a position, an orientation, a dimension, etc.

11. The method according to any one of the preceding claims, wherein said automatic procedure for setting the vision system (10) is executed during an operating process of the manufacturing machine (200) according to a testing mode.

12. A vision system (10) for controlling an operating process of a manufacturing machine (200) operating on articles (100), said vision system (10) comprising:
- at least one camera (12A, 12B, 12C);
- at least one lighting device (14A, 14B, 14C);
- at least one image-processing unit (16A, 16B, 16C); and
- a control unit (20) configured for implementing a method according to any one of the preceding claims.

13. A manufacturing machine for performing at least one operation on articles (100), comprising at least one workstation (203, 205) for performing said at least one operation, and a vision system (10) according to claim 10.

14. The manufacturing machine according to claim 13, wherein said manufacturing machine is a labelling machine (200) for applying at least one label (106, 108) on a package (100).
